# EUROPEAN PATENT SPECIFICATION

(11) **EP 0 450 976 B1**
(45) Date of publication and mention of the grant of the patent: **05.04.1995**
(21) Application number: 91303021.9
(22) Date of filing: 05.04.1991
(51) Int. Cl.: G11B 23/087

(54) **Tape cassette**
Bandkassette
Cassette à bande

(30) Priority: 06.04.1990 JP 91503/90
(43) Date of publication of application: 09.10.1991
(73) Proprietor: SONY CORPORATION, Tokyo 141 (JP)
(72) Inventor: Nakagawa, Tomihiro, c/o Patents Div. Sony Corp., Tokyo 141 (JP)
(74) Representative: Purvis, William Michael Cameron

(56) References cited:
- EP-A- 0 111 876
- EP-A- 0 146 311
- US-A- 4 650 136
- US-A- 4 742 415

## Description

The invention relates to a tape cassette.

In a tape cassette for use with a VTR or the like, it is often desirable to provide a reel lock mechanism to prevent slackening of the tape when the tape cassette is not in use.

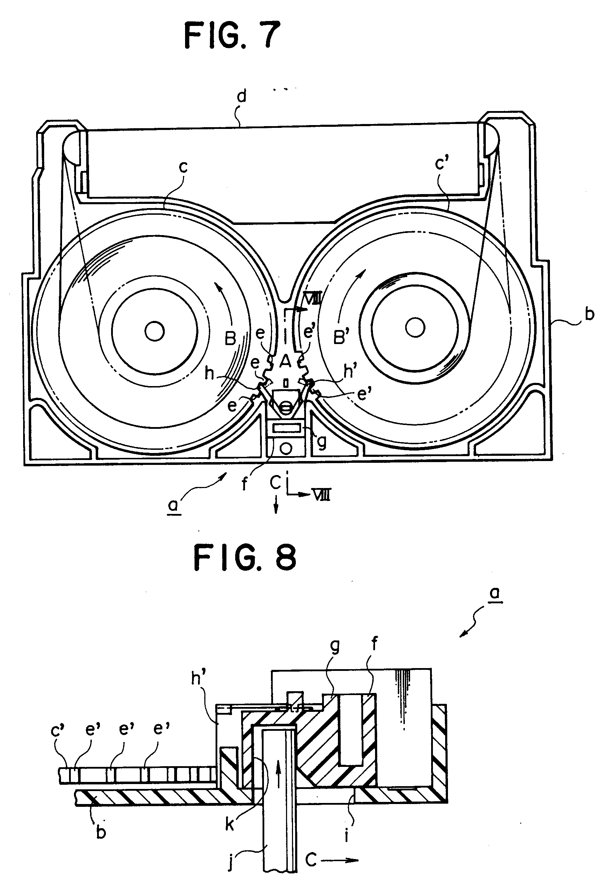

Figures 7 and 8 of the accompanying drawings show an example of such a reel lock mechanism a in the conventional tape cassette.

Referring to Figures 7 and 8, a lower half b of a cassette case is shown to contain a supply tape reel and a take-up tape reel with lower flanges c and c′ around which a magnetic tape d is wound. The lower flanges c and c′ are formed with a plurality of outer circumferential teeth e and e′, respectively.

A reel lock member f comprises a main portion g and two lock portions h and h′ projecting from the main portion g. The reel lock member f is biased in a direction as depicted by arrow A by biasing means (not shown).

The lock portions h and h′ are formed of an elastic material, and they are normally engaged with the teeth e and e′ of the lower flanges c and c′ thereby to lock the tape reels.

Thus, while the flanges c and c′ are permitted to rotate in opposite directions to stretch the magnetic tape d as depicted by arrows B and B′, the flanges c and c′ are restrained from rotating in the directions of slackening of the magnetic tape d by means of the lock portions h and h′.

In the reel lock mechanism of such a tape cassette, when the tape cassette is loaded into a cassette receiving portion of recording and reproducing apparatus, the locked condition of the tape reels must be released. Therefore, a slide surface of the lower half b on which the reel lock member f can slide is formed with a through-hole i to allow insertion of a lock release pin j provided in the cassette receiving portion. Further, the main portion g of the reel lock member f is formed at its lower surface with an engagement hole k to receive the lock release pin j inserted through the through-hole i of the lower half b. Under the condition where the lock release pin j is engaged with the engagement hole k of the reel lock member f, the lock release pin j is moved in an unlocking direction, that is, in a direction as depicted by arrow C in Figure 8, thereby moving the reel lock member f in the unlocking direction against the biasing force of the biasing means.

There is a possibility that a burr may be generated at an opening edge of the through-hole i upon formation of the through-hole i through the slide surface of the lower half b. As a result, a bottom surface of the main portion g of the reel lock member f can be caught by the burr during the movement of the reel lock member f and smooth sliding movement of the reel lock member f hindered. Particularly, movement in the locking direction may be hindered to cause a possibility of defective locking.

Further, the lower half b is formed with many walls and projections complicated in arrangement in an area where the reel lock member f is disposed.

An ejector pin may be employed to abut against the slide surface of the lower half b, so as to separate the lower half b from a mould upon a moulding of the cassette case. In this case, a burr-like projection can be generated at the peripheral edge of a contact position where the ejector pin engages the slide surface. Such a burr-like projection can also hinder smooth sliding movement of the reel lock member f.

Although the burr generated at the opening edge of the through-hole i or the burr-like projection generated at the peripheral edge of the contact position due to engagement of the ejector pin can be removed by an extra operation carried out after moulding of the cassette case so as to smooth the slide surface of the lower half b, such an extra operation is undesirable since it can cause a considerable increase in cost.

Patent specification US-A-4742415 discloses a brake member slidable within a cassette case to brake two tape reels, wherein the brake member and the cassette case have cooperating rib and groove configurations to reduce side play of the brake member.

Patent specification EP-A-0146311 discloses a brake mechanism for a pair of reels of a tape cassette wherein a base block is slidable in a guideway within a cassette case to brake two tape reels.

According to the invention there is provided a tape cassette including a cassette case, a tape reel rotatably accommodated in the cassette case, a recording medium tape wound around the tape reel, a reel lock member slidably provided in the cassette case to lock the tape reel and a plurality of projections formed on an inner surface of the cassette case, characterised in that the reel lock member is mounted to slide on top of and in contact relationship with the plurality of projections so that it can slide freely irrespective of any obstacles formed on the inner surface of the cassette case.

Such a tape cassette can ensure smooth sliding of a reel lock member with respect to a cassette case and reliably effect locking and unlocking of the reel lock member with respect to a tape reel even if there are obstacles such as a burr generated at an inside opening edge of a hole formed through the slide surface or a burr-like projection generated at the peripheral edge of a contact position formed by engagement of an ejector pin with the slide surface upon moulding of the cassette case.

The invention is diagrammatically illustrated by way of example in the accompanying drawings, in which:
Figure 1 is a schematic plan view of a tape cassette according to a preferred embodiment of the invention, with an upper half of the tape cassette removed;
Figure 2 is an enlarged plan view of a reel lock mechanism of the tape cassette of Figure 1;
Figure 3 is an exploded perspective view of the tape cassette of Figure 1;

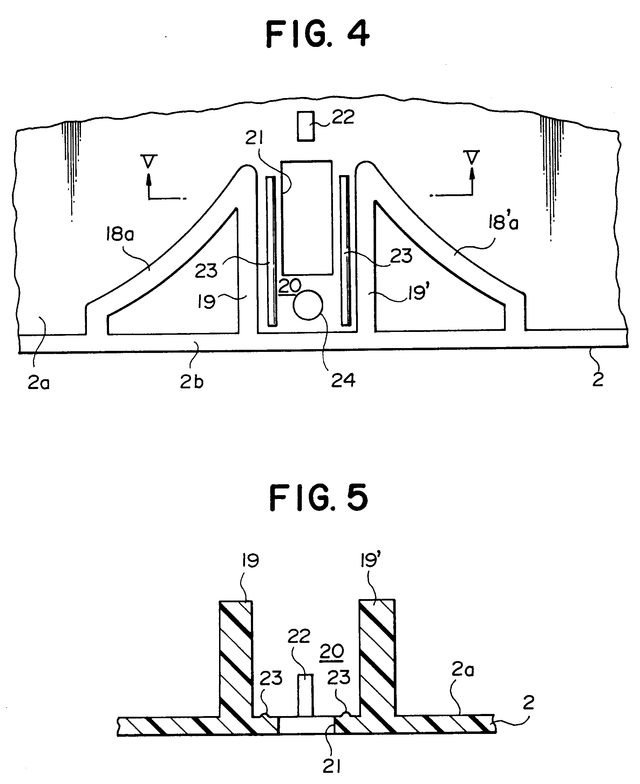

Figure 4 is an enlarged plan view of the reel lock mechanism of Figure 2 with a reel lock member removed;
Figure 5 is a cross section taken on line V-V in Figure 4;
Figure 6A is a cross section taken on line VI-VI in Figure 2, showing a condition before unlocking of the reel lock member;
Figure 6B is a view similar to Figure 6A, showing a condition after unlocking of the reel lock member;
Figure 7 is a schematic plan view of a tape cassette of previously proposed kind; and
Figure 8 is a cross section taken on line VIII-VIII in Figure 7.

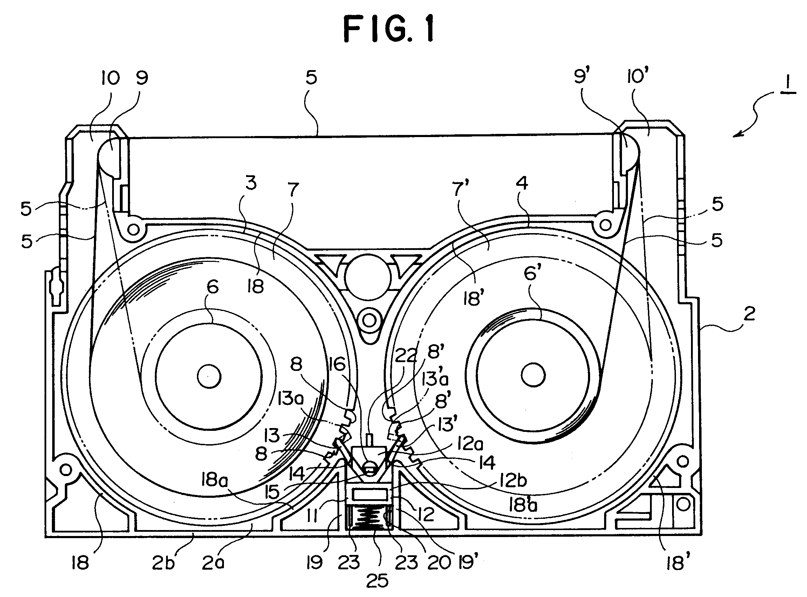

Referring to the drawings and firstly to Figure 1, a cassette half lower half 2 forms a cassette case 1 in co-operation with an upper half (not shown). A pair of tape reels 3 and 4 are rotatably accommodated in the cassette half 2. The tape reel 3 serves as a supply reel (S reel), and the tape reel 4 serves as a take-up reel (T reel).

The tape reel 3 is formed by a reel hub 6 around which a magnetic tape 5 is wound, and a pair of upper and lower reel flanges 7 (the lower flange 7 only being shown). Similarly, the tape reel 4 is constructed of a reel hub 6′ around which the magnetic tape 5 is wound, and a pair of upper and lower flanges 7′ (the lower flange 7′ only being shown). The lower flanges 7 and 7′ are formed with a plurality of outer circumferential teeth 8 and 8′ arranged at regular intervals, respectively.

The magnetic tape 5 taken out from the S reel 3 is guided by a tape guide 9 to extend out of an opening 10 of the tape cassette 1. Then, the magnetic tape 5 is introduced through another opening 10′ into the tape cassette 1, and is taken up by the T reel 4, guided by another tape guide 9′.

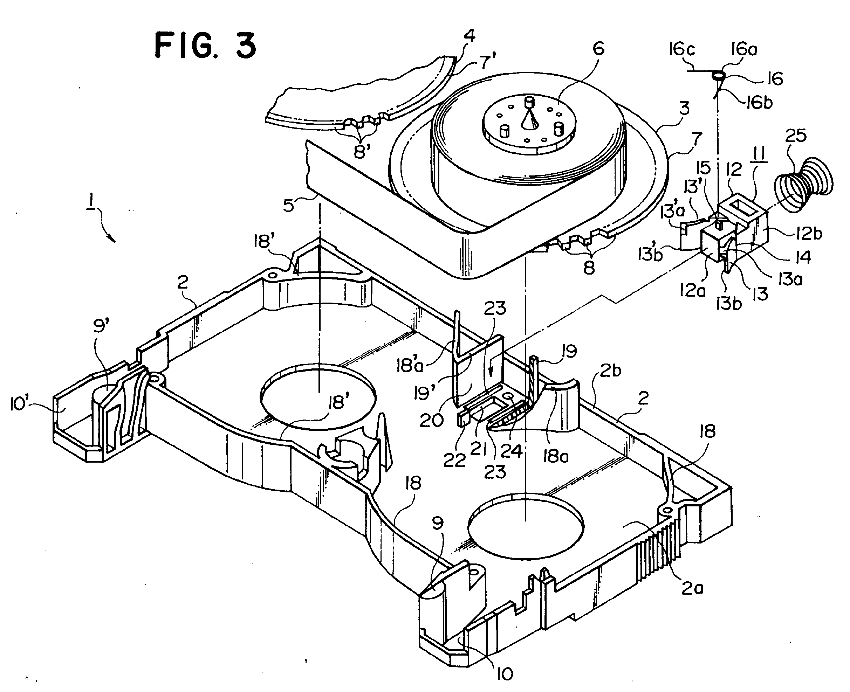

Referring to Figures 1 to 3 and Figures 6A and 6B, a reel lock member 11 is formed by a main portion 12 having a substantial rectangular block shape and two lock portions 13 and 13′. The main portion 12 and the two lock portions 13 and 13′ are formed integrally with each other.

The main portion 12 comprises a front half portion 12a and a rear half portion 12b having a width slightly smaller than that of the front half portion 12a. The rear half portion 12b is formed at its front end with two stepped portions 12c extending frontwardly.

The lock portions 13 and 13′ are formed as thin planar portions, and they are integrally connected at their rear ends through thin-walled hinge portions 14 to front ends of the stepped portions 12c of the rear half portion 12b. The lock portions 13 and 13′ are integrally formed at their front upper ends with spring stopper portions 13a and 13′a projecting inwardly.

A support pin 15 projects from an upper surface of the front half portions 12a of the main portion 12 at a substantially central portion thereof.

A torsion spring 16 has a portion 16a supported around the support pin 15 of the main portion 12. One arm 16b of the torsion spring 16 is in elastic contact with an inside surface of the lock portion 13 beneath the spring stopper portion 13a and another arm 16c of the torsion spring 16 is in elastic contact with an inside surface of the lock portion 13′ beneath the spring stopper portion 13′a.

The main portion 12 is formed with an engagement recess 17 having a lower opening which is formed at its rear end with an inclined surface 17a inclined rearwardly.

Ribs 18, 18′ define spaces where the tape reels 3 and 4 are accommodated, respectively. The ribs 18 and 18′ are formed to project upwardly from a bottom plate 2a of the lower half 2 so as to be located on circles having diameters slightly larger than those of the lower flanges 7 and 7′, respectively.

A pair of arcuate standing walls 18a and 18′a each having an arcuate inside surface are also formed to project upwardly from the bottom plate 2a of the lower half 2 at a middle position of a rear wall 2b of the lower half 2 (assuming that the edge that leads upon insertion into recording or reproducing apparatus is taken as the front of the tape cassette 1). The standing walls 18a and 18′a form part of the ribs 18 and 18′, respectively. Further, a pair of straight standing walls 19 and 19′ are also formed to project upwardly from the bottom plate 2a so as to extend in parallel from the rear wall 2b in the forward direction of the tape cassette 1 and continue to the arcuate standing walls 18a and 18′a, respectively.

A space 20 is defined by the parallel straight standing walls 19 and 19′, the bottom plate 2a, and the rear wall 2b. The reel lock member 11 is received in the space 20 so as to be slidable in the forward and rearward directions of the tape cassette 1.

An upper surface of the bottom plate 2a in the space 20 is formed as a slide surface on which the reel lock member 11 can slide.

The bottom plate 2a in the space 20 is formed with a rectangular through-hole 21 which is elongate in the front to rear direction of the tape cassette 1. A stop 22 is formed to project upwardly from the bottom plate 2a at a position just in front of the through-hole 21. Accordingly, the reel lock member 11 can slide in the forward and rearward directions of the tape cassette 1 between a position where the front end surface of the main portion 12 abuts against the stop 22 and a position where the rear end surface of the main portion 12 comes near the inner surface of the rear wall 2b.

Two ridges 23 project from the upper surface of the bottom plate 2a between on elongate side edge of the through-hole 21 and the straight standing wall 19 and between the other elongate side edge of the through-hole 21 and the straight standing wall 19′. The two ridges 23 extend over substantially the entire length of the space 20 in the front to rear direction of the tape cassette 1. The projection height of each ridge 23 from the upper surface of the bottom plate 2a is greater than the height of any burr likely to be generated at the inside opening edge of the through-hole 21.

An ejector pin (not shown) makes contact with the upper surface of the bottom plate 2a at a contact position 24 upon separation from a mould. The projection height of each ridge 23 is also greater than the height of any burr-like projection likely to be generated at the peripheral edge of the contact position 24.

The reel lock member 11 is disposed on the two ridges 23 in the space 20 in such a manner that opposite side portions of a bottom surface of the main portion 12 contact the two ridges 23. In movement of the reel lock member 11 under the above condition, the bottom surface of the main portion 12 slides on the two ridges 23.

A coil spring 25 has large-diameter opposite end portions and a small-diameter middle portion.

One end of the coil spring 25 is in elastic contact with the rear end surface of the main portion 12 of the reel lock member 11, and the other end of the coil spring 25 is in elastic contact with the inner surface of the rear wall 2b.

Accordingly, the reel lock member 11 is normally forwardly biased by the elastic force of the coil spring 25 in the condition where front ends 13b and 13′b of the lock portions 13 and 13′ of the reel lock member 11 are engaged with the teeth 8 and 8′ of the lower flanges 7 and 7′ of the tape reels 3 and 4, respectively. The forward movement of the reel lock member 11 is limited by the stop 22 projecting upwardly from the bottom plate 2a.

In operation, slackening of the magnetic tape 5 is prevented by the reel lock member 11 in the following manner.

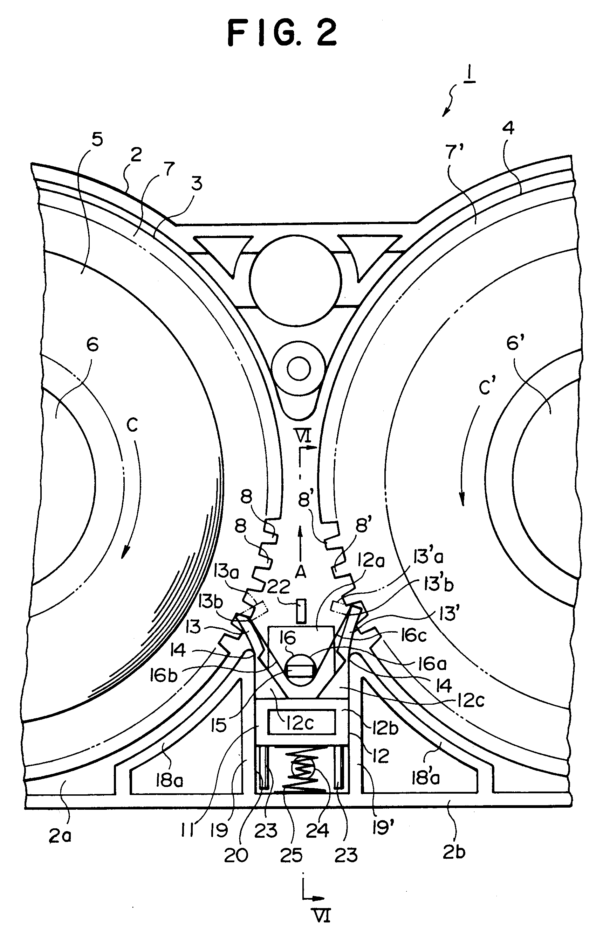

When the tape cassette 1 is not in use, the reel lock member 11 is biased by the elastic force of the coil spring 25 in the forward direction as depicted by arrow A in Figure 2, and the front ends 13b and 13′b of the lock portions 13 and 13′ are engaged with the teeth 8 and 8′ of the tape reels 3 and 4, respectively. Accordingly, rotation of the tape reels 3 and 4 in directions to cause slackening of the magnetic tape 5 as depicted by arrows C and C′ in Figure 2 is inhibited.

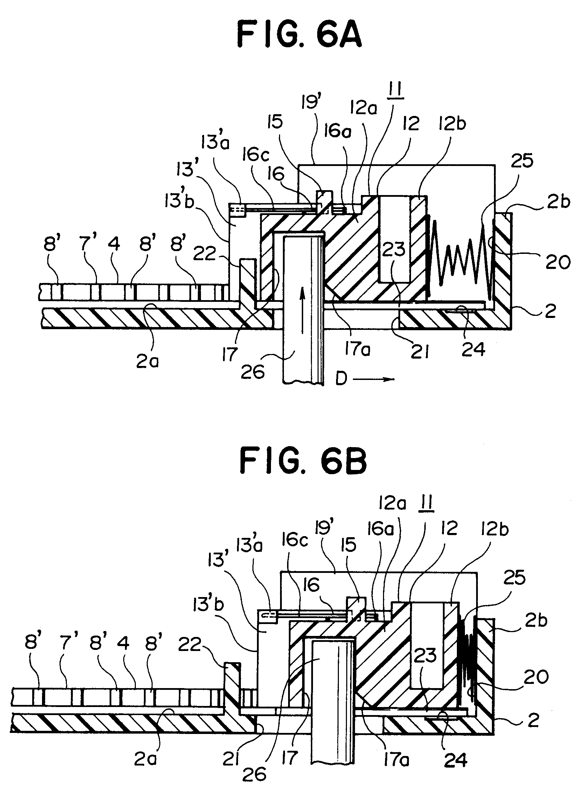

When the tape cassette 1 is loaded into recording and reproducing apparatus (not shown), a lock release pin 26 provided in the recording and reproducing apparatus is inserted through the through-hole 21 of the tape cassette 1 into the engagement recess 17 of the reel lock member 11 as shown in Figure 6A. Then, the lock release pin 26 is moved in a direction as depicted by arrow D in Figure 6A to move the reel lock member 11 rearwardly against the biasing force of the coil spring 25. As a result, the engagement of the lock portions 13 and 13′ of the reel lock member 11 with the teeth 8 and 8′ of the lower flanges 7 and 7′ is released as shown in Figure 6B.

The movement of the reel lock member 11 is carried out by the sliding operation of the bottom surface of the main portion 12 on the two ridges 23 formed on the upper surface of the bottom plate 2a of the tape cassette 1. Therefore, even if a burr is present at the inside opening edge of the through-hole 21, or a burr-like projection is present at the peripheral edge of the contact position 24 due to engagement of an ejector pin, movement of the reel lock member 11 is not affected at all by such burr or burr-like projection. Accordingly, the reel lock member 11 can be smoothly moved, and the locking and unlocking operations of the reel lock member 11 with respect to the tape reels 3 and 4 can be reliably effected.

The projections on which the reel member can slide may be provided in ways other than the two ridges 23 shown. For example, the projections may be formed by embossing so as to improve the sliding contact with the reel lock member, provided that the height of the projections is greater than the height of a burr or burr-like projection, which might otherwise obstruct movement of the reel lock member.

## Claims

1. A tape cassette including a cassette case (1), a tape reel (3, 4) rotatably accommodated in the cassette case, a recording medium tape (5) wound around the tape reel (3, 4), a reel lock member (11) slidably provided in the cassette case (1) to lock the tape reel (3, 4) and a plurality of projections (23) formed on an inner surface of the cassette case, characterised in that the reel lock member (11) is mounted to slide on top of and in contact relationship with the plurality of projections (23) so that it can slide freely irrespective of any obstacles formed on the inner surface of the cassette case.

2. A tape cassette according to claim 1, wherein the projections comprise a plurality of ridges (23).

3. A tape cassette according to claim 2, wherein the ridges (23) extend parallel to a direction in which the reel lock member (11) can slide in operation.

4. A tape cassette according to claim 3, wherein the cassette case is formed with a through-hole (21) to allow insertion of a lock release pin (26) provided in a recording and reproducing apparatus, and the projections (23) are formed on opposite sides of the through-hole (21).

5. A tape cassette according to claim 3, wherein the cassette case is formed with a contact position (24), to be contacted by an ejector pin upon moulding of the cassette case (1), between the ridges (23).

## Patentansprüche

1. Bandkassette, umfassend ein Kassettengehäuse (1), eine drehbar in dem Kassettengehäuse aufgenommene Bandspule (3, 4), ein um die Bandspule (3, 4) gewickeltes Aufzeichnungsträgerband (5), ein zur Verriegelung der Bandspule (3, 4) gleitbar in dem Kassettengehäuse (1) vorgesehenes Spulenverriegelungselement (11) und eine Mehrzahl von an der inneren Oberfläche des Kassettengehäuses vorgesehenen Überständen (23), dadurch gekennzeichnet, daß das Spulenverriegelungselement (11) gleitbar auf der Oberseite der und in Berührung mit der Mehrzahl der Überstände (23) befestigt ist, so daß dieses frei gleitbar, ohne Behinderung jeglicher auf der inneren Oberfläche des Kassettengehäuses gebildeten Hindernisse, ist.

2. Bandkassette nach Anspruch 1, wobei die Überstände eine Mehrzahl von Wülsten (23) umfassen.

3. Bandkassette nach Anspruch 2, wobei die Wülste (23) sich parallel in eine Richtung erstrecken, in der das Spulenverriegelungselement (11) beim Betrieb gleitbar ist.

4. Bandkassette nach Anspruch 3, wobei das Kassettengehäuse zum Einführen eines in einem Aufnahme- und Wiedergabegerät vorgesehenen Verriegelungsentriegelstiftes (26) mit einem Durchgangsloch (21) ausgebildet ist, und die Überstände (23) an den gegenüberliegenden Seiten des Durchgangsloches (21) gebildet sind.

5. Bandkassette nach Anspruch 3, wobei das Kassettengehäuse zwischen den Wülsten (23) mit einer Kontaktposition (24) ausgebildet ist, die in Kontakt mit einem Auswurfstift beim Formen des Kassettengehäuses (1) kommt.

## Revendications

1. Cassette de bande comprenant une boîte (1) de cassette, une bobine (3, 4) de bande logée mobile en rotation dans la boîte de cassette, une bande (5) de milieu d'enregistrement enroulée autour de la bobine (3, 4) de bande, un élément (11) de blocage de la bobine, monté coulissant dans la boîte (1) de cassette pour bloquer la bobine (3, 4) de bande, et une pluralité de saillies (23) formées sur une surface intérieure de la boîte de cassette, caractérisée en ce que l'élément (11) de blocage de bobine est monté pour coulisser sur la pluralité de saillies (23) et en contact avec celles-ci, de manière à pouvoir coulisser librement indépendamment des obstacles éventuellement formés sur la surface intérieure de la boîte de cassette.

2. Cassette de bande selon la revendication 1, dans laquelle les saillies comprennent une pluralité de nervures (23).

3. Cassette de bande selon la revendication 2, dans laquelle les nervures (23) s'étendent parallèlement à une direction dans laquelle l'élément (11) de blocage de la bobine peut coulisser en fonctionnement.

4. Cassette de bande selon la revendication 3, dans laquelle la boîte de cassette est munie d'un trou traversant (21) pour permettre l'insertion d'un doigt (26) de déblocage prévu dans l'appareil d'enregistrement et de reproduction, et les saillies (23) sont formées de part et d'autre du trou traversant (21).

5. Cassette de bande selon la revendication 3, dans laquelle la boîte de cassette est munie, entre les nervures (23), d'une position de contact (24) destinée à être attaquée par une tige d'éjecteur à la suite du moulage de la boîte de cassette (1).
